**Europäisches Patentamt**

**European Patent Office**

**Office européen des brevets**

(11) Veröffentlichungsnummer : **0 313 606 B1**

(12) **EUROPÄISCHE PATENTSCHRIFT**

(45) Veröffentlichungstag der Patentschrift :
**19.08.92 Patentblatt 92/34**

(21) Anmeldenummer : **88903827.9**

(22) Anmeldetag : **03.05.88**

(86) Internationale Anmeldenummer :
**PCT/EP88/00366**

(87) Internationale Veröffentlichungsnummer :
**WO 88/09033 17.11.88 Gazette 88/25**

(51) Int. Cl.⁵ : **G11B 17/22**

(54) **CD-PLATTENWECHSLER.**

(30) Priorität : **07.05.87 DE 3715164**

(43) Veröffentlichungstag der Anmeldung :
**03.05.89 Patentblatt 89/18**

(45) Bekanntmachung des Hinweises auf die
Patenterteilung :
**19.08.92 Patentblatt 92/34**

(84) Benannte Vertragsstaaten :
**AT BE CH DE FR GB IT LI LU NL SE**

(56) Entgegenhaltungen :
**EP-A- 0 066 317
BE-A- 0 903 223
GB-A- 2 161 013
GB-A- 2 162 991
US-A- 4 580 254**

(56) Entgegenhaltungen :
**Patent Abstracts of Japan, Band 8, Nr. 269
(P-319)(1706), 8 Dezember 1984 ; & JP-
A-59135661 (MATSUSHITA DENKI SANGYO
KK),3 August 1984, see abstract;figs.
Patent Abstracts of Japan, Band 10, Nr. 361
(P-523)(2418), 4. Dezember 1986 ; & JP-
A-61156563 (TOSHIBA CORP.), 16 July1986,
see abstract;figs.**

(73) Patentinhaber : **Deutsche Thomson-Brandt
GmbH
Hermann-Schwer-Strasse 3 Postfach 1307
W-7730 Villingen-Schwenningen (DE)**

(72) Erfinder : **GEIGER, Erich
Panoramaweg 19
W-7731 Unterkirnach (DE)**
Erfinder : **MAHR, Peter
Brandenburgerstrasse 20
W-7819 Denzlingen (DE)**

EP 0 313 606 B1

## Beschreibung

Die vorliegende Erfindung betrifft einen CD-Plattenwechsler gemäß dem Oberbegriff des Anspruchs 1.

Ein CD-Wechsler, mit dem wahlweise verschiedene CD-Platten abgespielt werden können, enthält vorzugsweise ein Abspielteil mit dem Antrieb, dem Abtaster und den Signalverarbeitungsschaltungen sowie ein Magazin, in dem stapelartig eine Vielzahl von CD-Platten angeordnet ist. Zwischen dem Abspielteil und dem Magazin sind Mittel vorgesehen, mit denen je nach Bedarf eine der in dem Magazin enthaltenen CD-Platten aus dem Magazin herausgenommen und in die Abspiellage innerhalb des Abspielteils gebracht werden kann. Zur Auswahl verschiedener CD-Platten ist dabei eine Relativbewegung zwischen dem Abspielteil und dem Magazin erforderlich. Durch diese Bewegung wird das Abspielteil gegenüber dem Magazin in die Lage gebracht, in der eine gewünschte CD-Platte aus dem Magazin herausgenommen werden kann. Dabei ist es notwendig, die Relativlage zwischen dem Abspielteil und dem Magazin genau zu ermitteln und zu steuern.

Dokument JP-A- 59/135661 offenbart einen CD-Plattenwechsler mit einem Abspielteil und einem Magazin. Das Magazin weist Magazin fächer auf, die Plattenträger enthalten, worauf Platten gelagert sind. Zur Entnahme verschieden Plattenträger sind das Abspielteil und das Magazin in ihrer Höhenlage gegeneinander verschiebbar, wobei für ihre Positionierung relativ zu einander eine optische Abtatung der Platterträger vorgesehen ist.

Der Erfindung liegt die Aufgabe zugrunde, für einen derartigen Wechsler eine Positionierung des Abspielteils relativ zum Magazin zu schaffen, die besonders einfach ist und mit im wesentlichen berührungsloser Ermittlung der Position arbeitet.

Diese Aufgabe wird durch die im Anspruch 1 beschriebene Erfindung gelöst. Vorteilhafte Weiterbildungen der Erfindung sind in den Unteransprüchen beschrieben.

Es zeigen

Fig. 1 Im Prinzip die Wirkungsweise der optischen Abtastung bei relativ zueinander bewegtem Abspielteil und Magazin,

Fig. 2 ein Magazin mit seitlicher Abtastung der Platten,

Fig.3,4,5 Ausführungsformen der Lichtleiter in Fig. 2,

Fig. 6 Kennlinien der Abtastung für große und kleine CD,

Fig. 7 ein Behälterteil für ein Plattenfach zum Zusammensetzen eines Magazins,

Fig. 8 eine Weiterbildung des Magazins mit zusätzlicher Reflexionsstelle je Fach,

Fig. 9 ein Reflexionsbauteil

Fig. 10 ein Magazin mit verschiebbarem Plattenbehälter,

Fig. 11 eine Draufsicht auf ein Magazinfach mit Innenbehälter,

Fig. 12 Meßergebnisse.

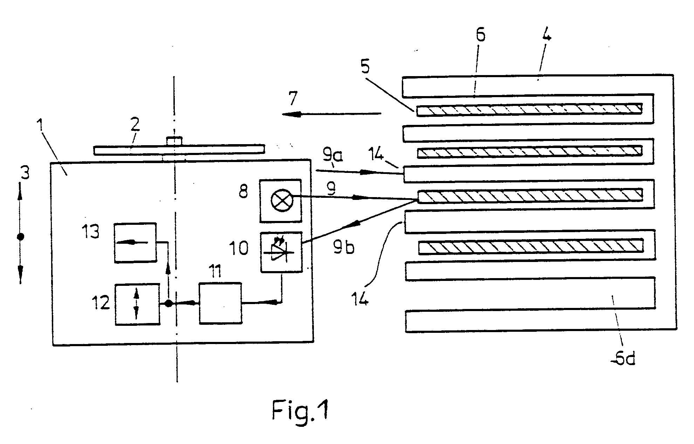

In Fig. 1 ist das Abspielteil 1 mit dem Plattenteller 2 in den Richtungen 3 relativ zu dem feststehenden Magazin 4 verschiebbar angeordnet, um wahlweise verschiedene CD-Platten 5 aus den einzelnen Fächern 6 entnehmen zu können. Es wird jeweils eine CD-Platte 5 dem Magazin 4 durch nicht näher dargestellte Mittel, z. B. einen mittels Bowdenzug gesteuerten Schieber, entnommen oder transportiert und in Richtung 7 dem Plattenteller 2 zugeführt. Es ist auch möglich, den Plattenspieler 1 feststehend anzuordnen und das Magazin zu bewegen.

Das Abspielteil 1 enthält eine Lichtquelle 8, die den Lichtstrahl 9 in Richtung auf die linke Wand des Magazins 4 wirft. Im Abspielteil 1 sind weiterhin vorgesehen ein Fotoelement 10, eine Steuerschaltung 11, ein Antrieb 12 und eine Steuerstufe 13 für die Entnahme einer Platte 5 in Richtung 7 (oder die Auslösung eines Transports für diese Platte).

Wenn das Abspielteil 1 in Richtung 3 bewegt wird, um eine bestimmte Platte 5 dem Magazin 4 zu entnehmen, trifft der Lichtstrahl beispielsweise zunächst auf die dunkel ausgebildete Vorderwand 14 des Magazins 4, wie durch den Lichtstrahl 9a dargestellt. An der schwarz oder nicht reflektierend ausgebildeten Vorderwand 14 wird der Lichtstrahl 9a nicht oder nur schwach reflektiert. Auf das Fotoelement 10 gelangt dadurch kein oder nur wenig Licht. Dadurch wird die Steuerschaltung 11 so gesteuert, daß der Antrieb 12 für die Bewegung des Abspielteils 1 in Richtung 3 eingeschaltet bleibt und die Steuerstufe 13 für die Entnahme einer Platte 5 in Richtung 7 nicht eingeschaltet oder wirksam wird. Für die Auswahl einer bestimmten CD-Platte 5 kann sich das Abspielteil 1 (oder auch das Magazin 4) weiterbewegen, beispielsweise in Richtung 3.

Wenn das Abspielteil 1 relativ zum Magazin eine zur Entnahme einer Platte 5 geeignete relative Lage erreicht hat, trifft der Lichtstrahl 9 auf eine CD-Platte 5. Dadurch entsteht der reflektierte Lichtstrahl 9b, der auf das Fotoelement 10 gelangt. Dadurch wird die Steuerschaltung 11 so angesteuert, daß der Antrieb 12 für die Bewegung in Richtung 3 abgeschaltet und die Steuerstufe 13 für die Entnahme einer Platte 5 eingeschaltet wird. Die Reflexion des Lichtstrahls 9 an einer CD-Platte 5 wird also ausgenutzt als Kriterium dafür, daß das Abspielteil 1 relativ zum Magazin 4 eine zur Entnahme einer CD-Platte 5 geeignete Stellung eingenommen hat. Wenn der Lichtstrahl 9 auf die kleine Platte 5 enthaltene Kammer 6d gerichtet ist, erfolgt ebenfalls keine ausreichende Reflexion. Die Steuerstufe 13 zur Entnahme einer Platte 5 wird dann nicht ausgelöst.

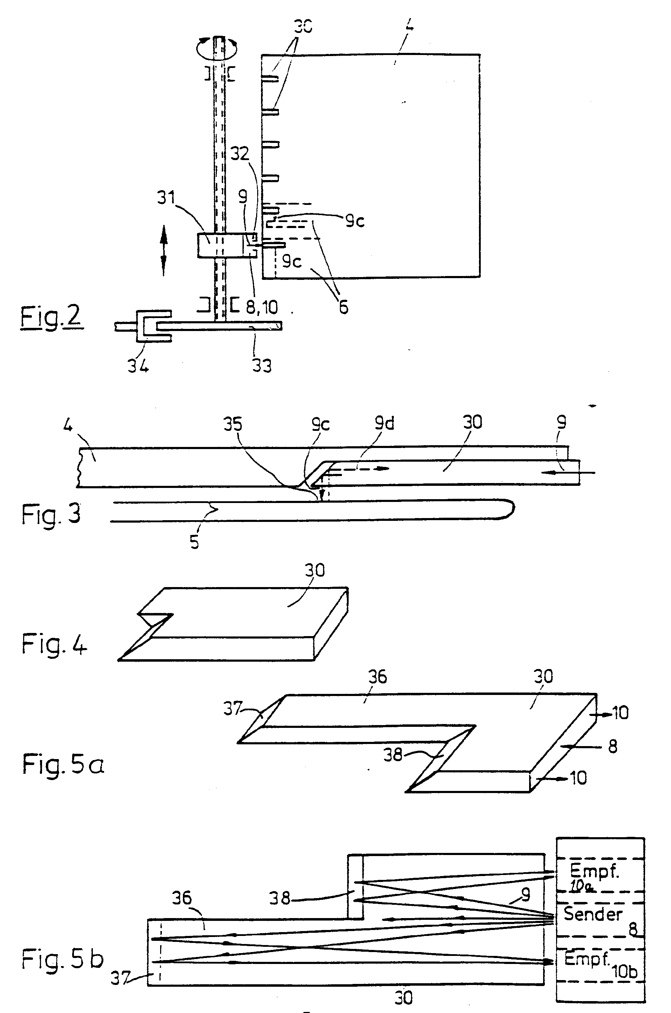

Fig. 2 zeigt nun die erfindungsgemäße Ausführung der in Fig. 1 nur im Prinzip dargestellten Anordnung mit einem Magazin 4, dessen einzelnen Fächern 6 Lichtleiter 30 zugeordnet sind. Diese Lichtleiter 30 sind so ausgebildet, daß sie einen von außen durch eine Lichtquelle 8 zugeführten Lichtstrahl 9 in das Innere des Faches 6 leiten und im Bereich der Platte 5 einen Strahl 9c auf die Seitenfläche der Platte 5 lenken. Zu diesem Zueck kann der Lichtleiter mit ein oder mehreren Reflexionsstellen versehen sein oder zur Seitenfläche der Platte 5 hin so gebogen sein, daß die Lichtaustrittsfläche zugleich Lichteintrittsfläche ist. Der von der Seitenfläche der Platte 5 reflektierte Strahl wird vom Lichtleiter 30 wieder aufgefangen und zum Fotoelement 10 geleitet. Zur Auf- und Abbewegung des die Lichtquelle 8 und das Fotoelement 10 tragenden Optoträgers 31 ist dieser Optoträger 31 vorzugsweise mit dem Abspielgerät (1 in Fig. 1) fest verbunden. Die Lage der Lichtleiter 30 und des Optoträgers 31 sind so aufeinander abgestimmt, daß bei Erreichen einer vorbestimmten Position das Abspielgerät auf die gerade erreichte Platte 5 justiert ist. Der Lichtquelle 8 ist eine Blende 32 zugeordnet, die für die erforderliche Feinjustierung ausreicht. Eine andere Möglichkeit der Feinjustierung ist die in Fig. 2 vorgesehene, durch den Optoträger 31 bei seiner Auf- und Abbewegung gedrehte oder bewegte Scheibe 33, die mit einem Abtaster 34 als Inkrementalgeber arbeitet. Die Zahl der Umdrehungen der Scheibe 33 ist ein Maß für die Höhenlage des Optoträgers 31.

Fig. 3 zeigt einen Lichtleiter 30 mit einer Reflexionsstelle 35 an seinem Ende mit einer darunter liegenden Platte 5. Der Lichtstrahl 9 wird am Ende des Lichtleiters 30 nach unten auf die Seitenfläche 35 der Platte 5 umgelenkt und dort reflektiert. Wenn die Seitenfläche 35 genügend reflektierend ausgebildet ist, gelangt der reflektierte Lichtstrahl 9d durch den Lichtleiter 30 zum Fotoelement 10 (Fig. 1). Die Platte 5 ist mit reflektierenden und nicht- oder schlecht reflektierenden Seitenflächen ausgestattet, so daß nur bei richtig eingelegter Platte 5 der Stopvorgang für die Auf- und Abwärtsbewegung des Abspielgerätes ausgelöst wird.

Fig. 4 zeigt einen Lichtleiter 30 mit mehreren Reflexionsstellen.

Fig. 5a und 5b zeigen einen Lichtleiter 30 mit einem Schenkel 36 mit Reflexionsstelle 37, der bis in den Bereich kleiner Platten 5 reicht, und einer Reflexionsstelle 38, die nur große Platten 5 erfaßt. Die Reflexionsstellen sind so versetzt angeordnet, daß aus der Größe des gemessenen, reflektierten Lichts darauf geschlossen werden kann, ob eine oder alle Reflexionsstellen reflektiertes Licht aufgenommen haben. Mit einem solchen Lichtleiter ist es möglich, richtig positionierte große Platten 5, richtig positionierte kleine Platten 5, falsch positionierte Platten und leere Fächer 6 voneinader zu unterscheiden.

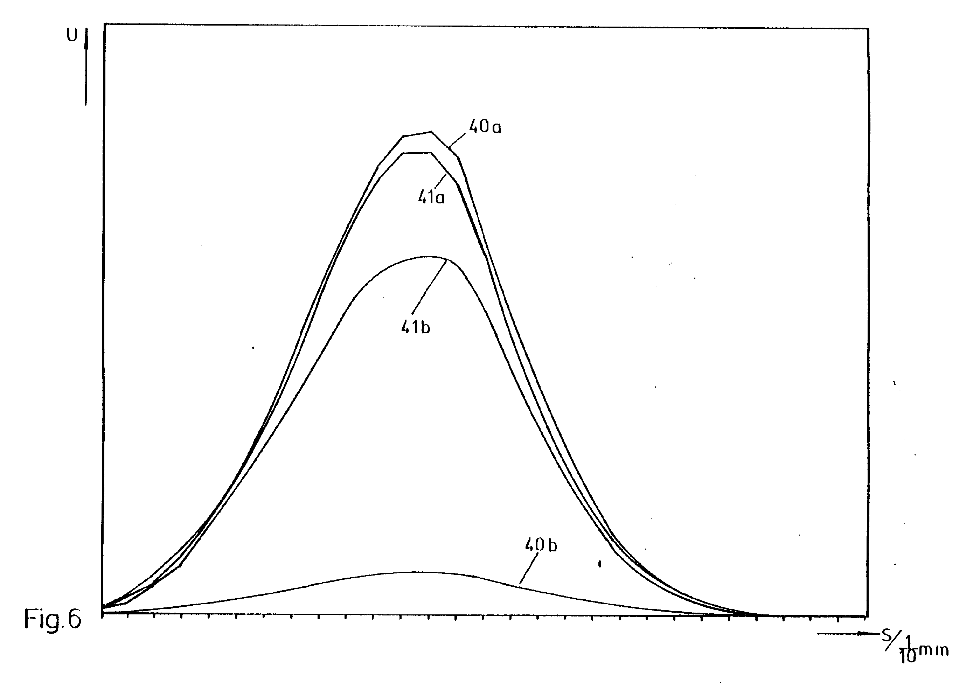

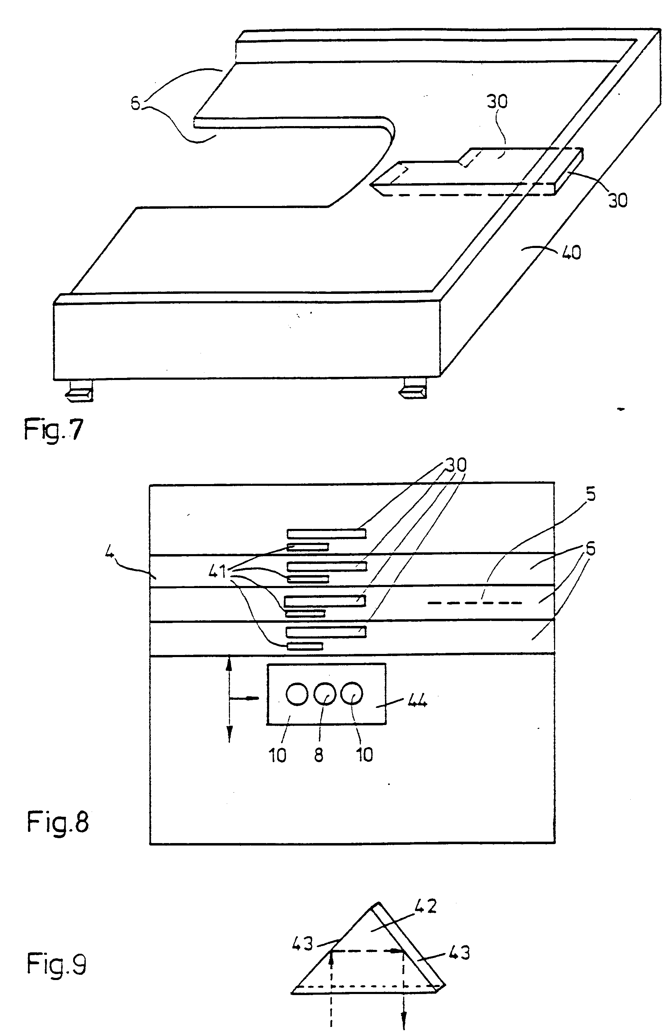

Fig. 6 zeigt Kurven für Meßergebnisse mit einem Lichtleiter 30 nach Fig 5, bei dem von einem Sucher 8 ein Lichtstrahl 9 so in den Lichtleiter 30 eingespeist wird, daß er beide Reflexionsstellen 37, 38 trifft. Das ggf. reflektierte Licht wird an mehreren den einzelnen Reflexionsstellen zugeordneten Fotoelementen 10 (Empfängern) gemessen. Der Empfänger 10a erhält nur reflektiertes Licht aus dem Schenkelteil 38, der Empfänger 10b nur aus dem Schenkel 36. Liegt eine kleine Platte 5 im Fach, erhält nur Empfänger 10b reflektiertes Licht, liegt dagegen eine große Platte 5 im Fach, so empfangen beide Empfänger 10a, 10b Licht, weil sich dann unter beiden Reflexionsstellen reflektierendes Plattenmaterial befindet. Die Meßkurven 40a, 40b in Fig. 7 entsprechen dem gemessenen Licht für eine kleine Platte, die also nur reflektiertes Licht von dem langen Schenkel 36 erhält. Dabei erhält auch der Empfänger 10a geringes Licht. Kurven 41a, b zeigen das Meßergebnis für von großen Platten reflektiertes Licht von den Reflexionsstellen 37 und 38. Kurve 41b ist also größer als Kurve 40a, weil beide Reflexionsstellen 37, 38 reflektiertes Licht von großen Platten ergeben. Mit dem Signal des Empfängers 10b wird erkannt, ob überhaupt eine Platte eingelegt ist. Damit erfolgt auch die richtige Positionierung. Die Unterschiede der Kurven 40a, 41a, 41b sind belanglos und beruhen auf Bauteileigenschaften. Je nach Schwellwert kann also die Auf- und Abbewegung korrekt auf die mit Platten 5 gefüllten Fächer 6 justiert werden. Durch Einsatz mehrerer Lichtstrahlen 9 oder mehrerer Fotoelemente 10 kann das Meßergebnis noch verfeinert werden. Das reflektierte Licht kann auch noch zur Anzeige ausgenutzt werden, ob die Platte nach dem Abspielen wieder ordnungsgemäß in das Fach 6 zurückgebracht worden ist.

Fig. 7 zeigt ein Behälterteil 40 in Snap-in Technik, das zum Aufbau eines Magazins 4 mit einer nahezu beliebigen Zahl von Fächern 6 verwendet werden kann.

Fig. 8 zeigt die Außenseite eines Magazins 4 mit Lichtleitern 30 für die Gewinnung des Steuersignals für die Auf- und Abbewegungder Teile 1 und/oder 4, bei dem zusätzlich feste Reflexionsstellen 41 für den Lichtstrahl 9 vorgesehen sind. Die festen Reflexionsstellen 41 sind ein Maß für die Zahl der vorhandenen Fächer 6. Ohne diese Reflexionsstellen wären leere Fächer 6 nicht zu erkennen. Sind beispielsweise in Fig. 1 von vier aufeinanderfolgenden Fächern 6 nur das erste, zweite und vierte Fach 6 mit einer Platte 5 bestückt, das dritte Fach 6 aber nicht, so würde die Platte 5 im vierten Fach als Platte 5 im dritten Fach interpretiert werden. Um auch korrekte Angaben zu leeren Fächern zu erzielen, werden Lichtreflexionen zu jedem Fach ausgewertet. Die Reflexionsstelle 41 kann unter Umständen ein ebener Spiegel sein, z. B. eine reflektierende Folie. Den sichtbaren, aus den einzelnen Fächern 6 heraustretenden Lichtleitern 30 und den Reflexionsstellen 41 ist ein auf- und abbewegbarer Optoträger 44 mit Lichtquelle 8 und Lichtempfänger 10 zugeordnet. Der Optoträger 44 kann fest mit dem Abspielgerät 1 verbunden und mit diesem zusammen bewegbar sein. Da aber die Lichtquelle 8 und der Lichtempfänger 10 für die Lichtleiter 30 angeordnet und bemessen sind, würde u. U. bei einem ebenen Spiegel der Lichtstrahl 9 bei Reflexion an der Stelle 41 nicht mit Sicherheit zum Empfänger 10 gelangen.

Fig. 9 zeigt ein Reflexionsbauteil 42 mit einer Reflexionsfläche 43, die für diesen Anwendungsfall optimiert ist. Durch die Form der Reflexionsfläche 43 wird erreicht, daß der Lichtstrahl vom Sender 8 zum Empfänger 10 gelangt.

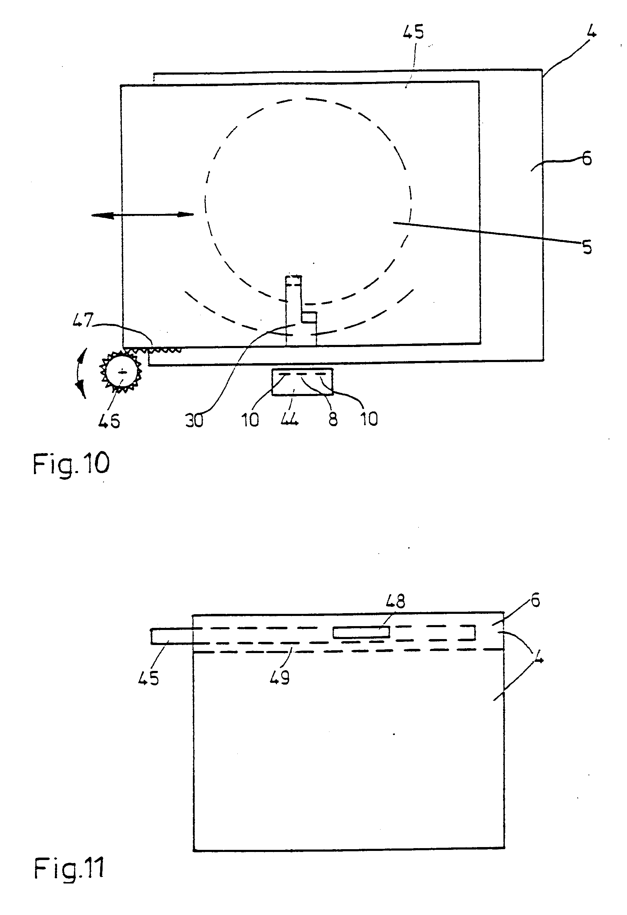

In Fig. 10 ist die Draufsicht des Fachs 6 eines Magazins 4 dargestellt, bei dem im Fach 6 ein verschiebbarer Behälter 45 angeordnet ist. An diesem Behälter 45 ist der oder sind die Lichtleiter 30 angeordnet, die mit dem Optoträger 44 zusammenarbeiten. Der Behälter 45 wird zusammen mit der Platte 5 aus dem Fach 6 heraus in die Abspielposition bewegt und nimmt dabei den Lichtleiter 30 mit. Dieser Lichtleiter 30 wandert also aus dem Strahlungsbereich des Optoträgers 44 heraus. Wird nun nach dem Ende des Abspielvorgangs der Behälter 45 wieder in das Fach 6 hineingeschoben, so kann das Erreichen der horizontalen Endstellung des Optoträgers 44 ermittelt und genutzt werden. Eine Zahnstange 47 und ein Zahnrad 46 bewirken das Aus- und Einfahren des Behälters 45.

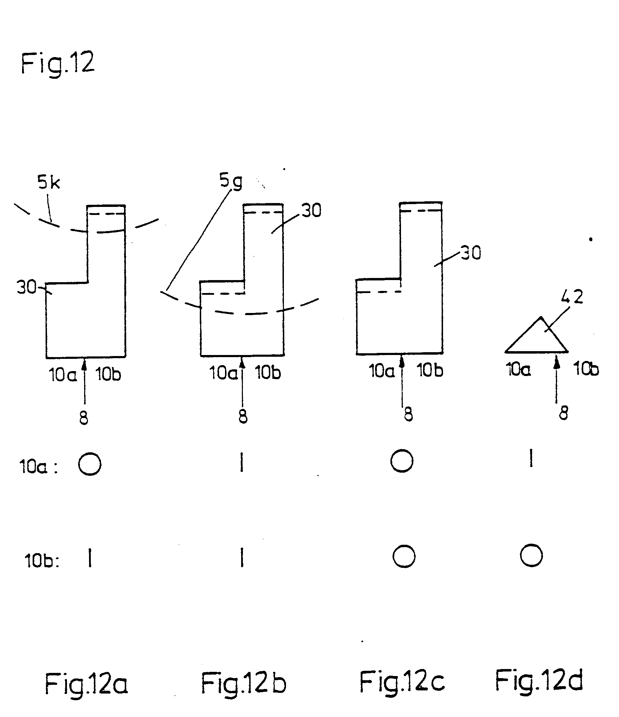

Fig. 11 zeigt die Ausbildung von Fach 6 und Innenbehälter 45 in Seitenansicht. Ein Fenster 48 in der Wandung des Magazins 4 ist maßgeblich für den Strahlungskontakt von Optoträger 44 und Lichtleiter 30. Eine Führungsleiste 49 ist für den jeweiligen Behälter 45 im Magazin 4 oder Fach 6 angeordnet.

Fig. 12a bis Fig. 12d zeigen in vier Meßstufen die Meßergebnisse mit einem abgesetzten Lichtleiter 30 und einem Reflektor 42, denen ein nicht dargestellter Lichtsender 8 und zwei Lichtempfänger 10 zugeordnet sind. In Fig. 12a gelangt der vom nicht dargestellten Sender 8 zur Platte 5k (klein), das ist eine Platte 5 kleinen Durchmessers von z. B: 7,6 cm, geleitete und dort reflektierte Lichtstrahl zum Empfänger 10b. In Fig. 12a - 12d sind unter dem Lichtleiter 30 die Empfänger 10a, 10b angedeutet und darunter in den beiden Empfängern die erzeugten Spannungen in Ja (1)- oder Nein (0)-Form angegeben. in Fig. 12a gibt nur der Empfänger 10b eine Spannung ab. In Fig. 12b ist die Platte 5g eine Platte großen Durchmessers.

Beide Empfänger 10a, 10b geben eine Spannung ab. In Fig. 12c ist keine Platte 5 vorgesehen und somit geben beide Empfänger 10a, 10b keine Spannung ab. Der Reflektor 42 in Fig. 12d bewirkt eine Spannung am Empfänger 10a, nicht aber im Empfänger 10b und kann daher von den Signalen des Lichtleiters 30 unterschieden werden, da dort bei einer großen wie auch einer kleinen Platte immer vom Empfänger 10b ein Signal zu erwarten ist.

## Patentansprüche

1. CD-Plattenwechsler mit einem Abspielteil (1) und einem Magazin (4), das Magazinfächer (6) zur Aufnahme von Platten (5) aufweist wobei des Abspielteil (1) und das Magazin (4) zur Entnahme verschiedener Platten (5) in ihrer Höhenlage gegeneinander verschiebbar sind, und wobei für ihre Positionierung relativ zueinander eine optische Abtastung der Platten (5) vorgesehen ist, **dadurch gekennzeichnet**, daß in jedes der Magazinfächer Lichtleiter (30) ragen, und daß die Lichtleiter (21) mit wenigstens zwei Lichtaustrittsstellen im Magazinfach (6) versehen sind, von denen die eine im Bereich des Plattenzentrums und die andere im Bereich des Plattenrandes angeordnet ist.

2. Wechsler nach Anspruch 1, **dadurch gekennzeichnet**, daß jeder Lichtleiter (30) das Licht einer Lichtquelle (8) auf eine Seitenfläche der Platte (5) lenkt, das von den Platten reflektierte Licht auffängt und einem Photoelement (10) oder dergleichen zuführt.

3. Wechsler nach Anspruch oder 2, **dadurch gekennzeichnet**, daß die Lichtleiter (30) in die die Platte (5) tragende eingesetzt sind und an den Lichtaustrittsstellen mit lichtumlenkenden Spiegelflächen versehen sind.

4. Wechsler nach Anspruch 1, 2 oder 3, **dadurch gekennzeichnet,** daß das Magazin (4) Wände (14) aufweist, die dem Abspielteil (1) zugewandt sind, und daß diese Wände (14) nicht lichtreflektierend ausgebildet sind.

5. Wechsler nach Anspruch 2, 3 oder 4 dadurch gekennzeichnet, daß das Fotoelement (10) an eine Steuerschaltung (11) für die Positionierung von Abspielteil (1) und/oder Magazin (4) zur relativen Positionierung von Abspielteil (1) und Magazin (4) angeschlossen ist.

## Claims

1. ACD disc changer device with a playing part (1) and a magazine (4), which has magazine compartments (6) for accommodating discs (5), in which the playing part (1) and the magazine (4) are displaceable in their height position with respect to each other for removing various discs (5), and in which optical scanning of the discs (5) is provided for their positioning relative to each other, **characterised in that** into each of the magazine compartments optical conductors (30) project, and that the optical conductors (2) are provided with at least two light outlet points in the magazine compartment (6), one of which is arranged in the region of the centre of the disc and the other is arranged in the region of the edge of the disc.

2. A changer device according to claim 1, **characterised in that** each optical conductor (30) directs the light from a light source (8) on to a side surface of the disc (5), collects the light reflected by the discs and supplies (it) to a photo element (10) or the like.

3. A changer device according to claim or 2, **characterised in that** the optical conductors (30) are inserted into the surface supporting the disc (5) and are provided at the light outlet points with light-deflecting mirror surfaces.

4. A changer device according to claim 1, 2 or 3, **characterised in that** the magazine (4) has walls (14) which face the playing part (1) and that these walls (14) are non light reflecting.

5. A changer device according to claim 2, 3 or 4 **characterised in that** the photo element (10) is connected to a control circuit (11) for positioning playing part (1) and/or magazine (4) for the purpose of relative positioning of playing part (1) and magazine (4).

**Revendications**

1. Chargeur de disques compacts avec une partie lecture (1) et un magasin (4) qui présente des cases de magasin (6) pour loger des disques (5), la partie lecture (1) et le magasin (4) pouvant être déplacés l'un par rapport à l'autre en hauteur pour prendre différents disques (5) et un balayage optique des disques (5) étant prévu pour leur positionnement l'un par rapport à l'autre, **caractérisé en ce** que des guides de lumière (30) font saillie dans chacune des cases de magasin et que les guides de lumière (30) sont pourvus d'au moins deux endroits de sortie de la lumière dans la case de magasin (6) parmi lesquels l'un est placé dans la zone du centre du disque et l'autre dans la zone du bord du disque.

2. Chargeur selon la revendication 1, **caractérisé en ce** que chaque guide de lumière (30) guide la lumière d'une source de lumière (8) sur une face latérale du disque (5) qui capte la lumière réfléchie par les disques et l'amène à une cellule photoélectrique (10) ou équivalent.

3. Chargeur selon la revendication 1 ou 2, **caractérisé en ce** que les guides de lumière (30) sont insérés dans la surface qui porte le disque (5) et qu'ils sont pourvus, aux endroits de sortie de la lumière, de surfaces réfléchissantes qui renvoient la lumière.

4. Chargeur selon la revendication 1, 2 ou 3, **caractérisé en ce** que le magasin (4) présente des parois (14) qui sont tournées vers la partie lecture (1) et que ces parois (14) sont configurées en n'étant pas réfléchissantes.

5. Chargeur selon la revendication 2, 3 ou 4, **caractérisé en ce** que la cellule photovoltaïque (10) est raccordée à un circuit de commande (11) pour le positionnement de la partie lecture (1) et/ou du magasin (4) pour le positionnement relatif de la partie lecture (1) et du magasin (4).

Fig.1

Fig. 2

30  4
32
31
9
9c
9c
6
8,10
34  33

Fig. 3

4  35  9c  9d  30  9
5

Fig. 4

30

Fig. 5 a

36  30
37  10
38  8
10

Fig. 5 b

Empf.
10a
36  38  9  Sender
8
Empf.
37  10b
30

Fig.6

40a

41a

41b

40b

U

S/ 1/10 mm

EP 0 313 606 B1

Fig.7

Fig.8

Fig.9

Fig.10

Fig.11

Fig.12

Fig.12a    Fig.12b    Fig.12c    Fig.12d